# EUROPEAN PATENT SPECIFICATION

(11) **EP 2 941 604 B1**
(45) Date of publication and mention of the grant of the patent: **05.09.2018**
(21) Application number: 13867734.9
(22) Date of filing: 27.12.2013
(51) Int. Cl.: F25B 41/04, F25B 47/02, F25B 1/00

(54) **METHOD OF REDUCING LIQUID FLOODING IN A TRANSPORT REFRIGERATION UNIT**
VERFAHREN ZUR REDUZIERUNG VON FLÜSSIGKEITSÜBERFLUTUNG IN EINER TRANSPORTKÜHLEINHEIT
PROCÉDÉ PERMETTANT DE RÉDUIRE L'ENGORGEMENT DE LIQUIDE DANS UNE UNITÉ DE RÉFRIGÉRATION DE TRANSPORT

(30) Priority: 27.12.2012 US 201261746333 P
(43) Date of publication of application: 11.11.2015
(73) Proprietor: Thermo King Corporation, Minneapolis, MN 55420 (US)
(72) Inventor: DOTZENROD, Ryan, J., Lakeville, MN 55044 (US); MA, YoungChan, Bloomington, MN 55431 (US); SULE, Titilope, Zaburat, Columbia Heights, MN 55421 (US)
(74) Representative: Haseltine Lake LLP
(86) International application number: PCT/US2013/077960
(87) International publication number: WO 2014/106030

(56) References cited:
- US-A1- 2009 013 701
- US-A1- 2009 013 701
- US-A1- 2009 077 983
- US-A1- 2009 090 118
- US-A1- 2010 089 083
- US-A1- 2010 175 396
- US-A1- 2012 247 138
- US-B2- 7 997 091

## Description

### Field

The disclosure herein relates to a transport refrigeration unit (TRU). More specifically, the disclosure herein relates to a method of reducing a risk of liquid flooding, such as liquid refrigerant flooding, in a compressor of the TRU by controlling an electronic throttle valve of the TRU.

### Background

TRUs have been used to regulate a space temperature of a transport unit, such as a truck, a trailer, a railway car, a shipping cargo box or a container. The TRU can be configured to include a compressor, a condenser, an expansion device (e.g. an expansion valve) and an evaporator, which form a refrigeration circuit. The refrigeration circuit of the TRU can be configured to provide cooling and/or heating to an internal space of the transport unit. Some TRUs may also be configured to have a defrosting mode to remove icing on the refrigeration circuit.

The compressor of the TRU may be, for example, a scroll compressor, a screw compressor, a reciprocating compressor, or other suitable compressors. The compressor typically requires lubrication, for example, provided by lubricating oil during operation. When the TRU is in operation, liquid refrigerant may flood the compressor in some cases, causing dilution to the lubricating oil and thus reducing the lubricating effect of the lubricating oil. Liquid refrigerant flooding may also cause a foaming action during the TRU start-up, which can, for example, drive all oil out of the compressor in a short period of time, causing high loads on bearings, scroll sets, and/or pistons. Liquid refrigerant may flood the compressor when the TRU for example is in a heating mode, a defrosting mode, or transition between a cooling mode to the heating/defrosting mode.

US 2009/090118 discloses a system and method for a compressor including an inverter drive connected to the compressor that receives electric power and modulates a speed of the compressor by modulating a frequency of the electric power. A control module connected to the inverter drive monitors compressor power data and compressor speed data from the inverter drive, and calculates a saturated condenser temperature of a refrigeration system associated with the compressor based on the compressor power data and the compressor speed data.

US 2009/013701 discloses a suction modulation valve which is throttled when conditions in a refrigerant system indicate that an undesirable amount of liquid refrigerant might otherwise be delivered to the compressor. The throttling occurs at start-up, among other conditions. Throttling the suction modulation valve reduces the amount of refrigerant reaching the compressor and thus ensures that any liquid refrigerant would be likely "boiled off' before raising any problems in the compressor.

### Summary

A compressor of a TRU may experience liquid refrigerant flooding, for example, when the TRU is operated in a heating/defrosting mode, or a transition mode between a cooling mode and a heating/defrosting mode. Some TRUs may be equipped with an electronic throttle valve (ETV) that is configured to control a volume of a refrigerant flowing into the compressor. Embodiments of the invention, according to claims 1, 4 and 6, are directed to controlling the ETV to reduce the occurrence or risk of the compressor being flooded by liquid refrigerant.

In some embodiments, a method to control the ETV may include determining whether there is a risk of a compressor of the TRU being flooded by liquid refrigerant; and closing down the ETV to a desired value when there is a risk for the compressor being flooded by liquid refrigerant.

In some embodiments, the method to control the ETV may include: measuring a refrigerant discharge temperature from the compressor; comparing the refrigerant discharge temperature to a saturated discharge temperature of the refrigerant; when the refrigerant discharge temperature and the saturated discharge temperature of the refrigerant is below or equal to a desired value, determining that there is a (unacceptable) risk of the compressor being flooded; and when the refrigerant discharge temperature and the saturated discharge temperature of the refrigerant is higher than the desired value, determining that there is no (or not an acceptable) risk of the compressor being flooded.

In some embodiments, the method may include measuring a refrigerant discharge temperature from the compressor; comparing the refrigerant discharge temperature to a saturated discharge temperature of the refrigerant; and controlling the electronic throttle so that a difference between the refrigerant discharge temperature from the compressor and the saturated discharge temperature of the refrigerant is within a desired threshold.

Other features and aspects of the fluid management approaches will become apparent by consideration of the following detailed description and accompanying drawings.

### Brief Description of the Drawings

Reference is now made to the drawings in which like reference numbers represent corresponding parts throughout.
Fig. 1 illustrates an embodiment of a transport unit, with which embodiments of the method disclosed herein can be practiced.
Fig. 2 illustrates a schematic diagram of a TRU equipped with an ETV.
Fig. 3 illustrates a flow chart of a method of controlling an ETV, according to one embodiment.
Fig. 4 illustrates a flow chart of another method of controlling an ETV, according to another embodiment.

### Detailed Description

A TRU can be used to regulate a space temperature of a transport unit, such as a truck, a trailer, a railway car, a shipping cargo box or a container. According to the invention, the TRU includes a compressor, a condenser, an expansion device and an evaporator, forming a refrigeration circuit. In operation, the compressor compresses refrigerant and drives the refrigerant through the refrigeration circuit. In these TRUs, an electronic throttle valve (ETV) is be positioned in-line between the evaporator and the compressor. The ETV may be configured to include a variable opening that allows refrigerant to flow there through. The variable opening can be controlled electronically so as to control a volume of the refrigerant that flows through the variable opening.

The compressor may be, for example, a scroll compressor, a screw compressor, a reciprocating compressor, etc. The compressor may require lubrication provided, for example, by oil to operate properly. In some operation conditions of the TRU, such as in a heating or defrosting mode, or in a transition between the heating/defrosting mode and a cooling mode, the liquid refrigerant may flow into the compressor, causing dilution of the oil. This may reduce, for example, a lubrication effect provided by the oil, which can result in a compressor failure. Liquid refrigerant flowing into the compressor is often called compressor flooding. Improvements can be made to the TRU to reduce/prevent the risk of the liquid refrigerant flooding to the compressor so as to help reduce/prevent compressor failures.

Embodiments of a method to reduce/prevent liquid refrigerant flooding to the compressor are disclosed herein. The method includes closing down (or shutting off) the ETV when there is a risk of compressor flooding by, for example, liquid refrigerant. In some embodiments, the method may include closing down the ETV to a desired value when there is a risk of the compressor flooding.

The compressor of the TRU is generally configured to compress a low-pressure refrigerant vapor to high-pressure superheated refrigerant vapor. When the compressor of the TRU is flooded or at a risk of being flooded by the liquid refrigerant, liquid refrigerant may flow into the compressor. As a result, the compressor may not be able to provide the superheated refrigerant vapor because of the presence of the liquid refrigerant. Therefore, the failure to provide the superheated refrigerant vapor by the compressor may indicate that the compressor may be at a risk of being flooded or flooded by the liquid refrigerant. In some embodiments, the method may include measuring a refrigerant discharge temperature of the compressor, and closing down the ETV when a difference between the refrigerant discharge temperature of the compressor and a refrigerant saturated discharge temperature is below a temperature threshold. In some embodiments, the threshold is about 10 to 15°R.

References are made to the accompanying drawings that form a part hereof, and in which is shown by way of illustration of the embodiments in which the embodiments may be practiced. The phrases "upstream" and "downstream" are referred relatively to a flow direction. The term "in line" generally means in fluid communication. The terms "compressor flooding," "refrigerant flooding in the compressor" and the alike terms are used interchangeably. The term "closing down" generally means reducing a size of an opening of an ETV; and the term "opening up" generally means increasing the size of the opening of the ETV. It is to be noted that the term "closing down" also includes fully shutting off the opening; and the term "opening up" also includes fully opening the opening. It is to be understood that the terms used herein are for the purpose of describing the figures and embodiments and should not be regarding as limiting the scope of the present application.

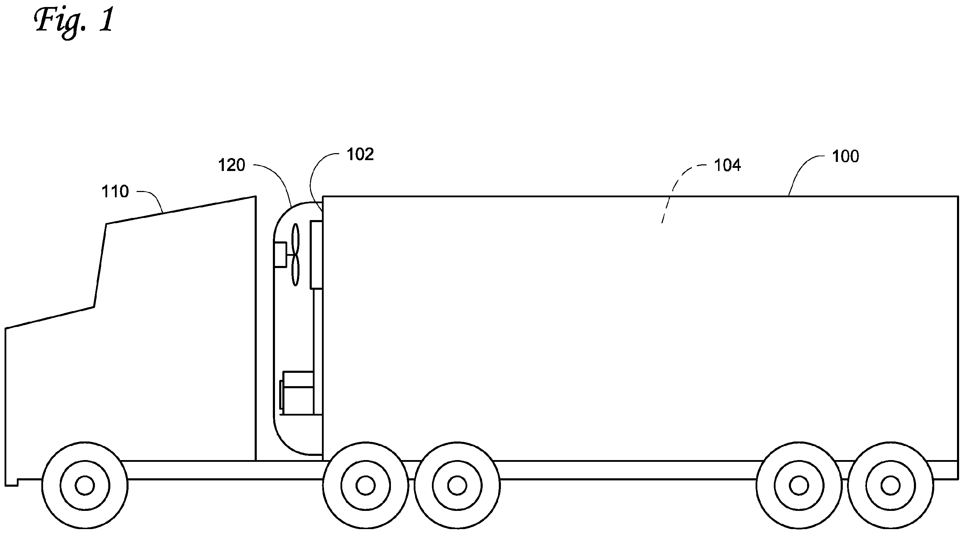

Fig. 1 illustrates a transport unit 100, with which the embodiments disclosed herein can be used. The transport unit 100 (for example a trailer unit) is configured to be transported by a tractor unit 110. A TRU 120 is configured to be attached to an end wall 102 of the transport unit 100. The TRU 120 is configured to regulate a space temperature of an internal space 104 of the transport unit 100.

It is appreciated that the embodiments disclosed herein can be used with other transport units, such as a railway car, or a cargo container/box.

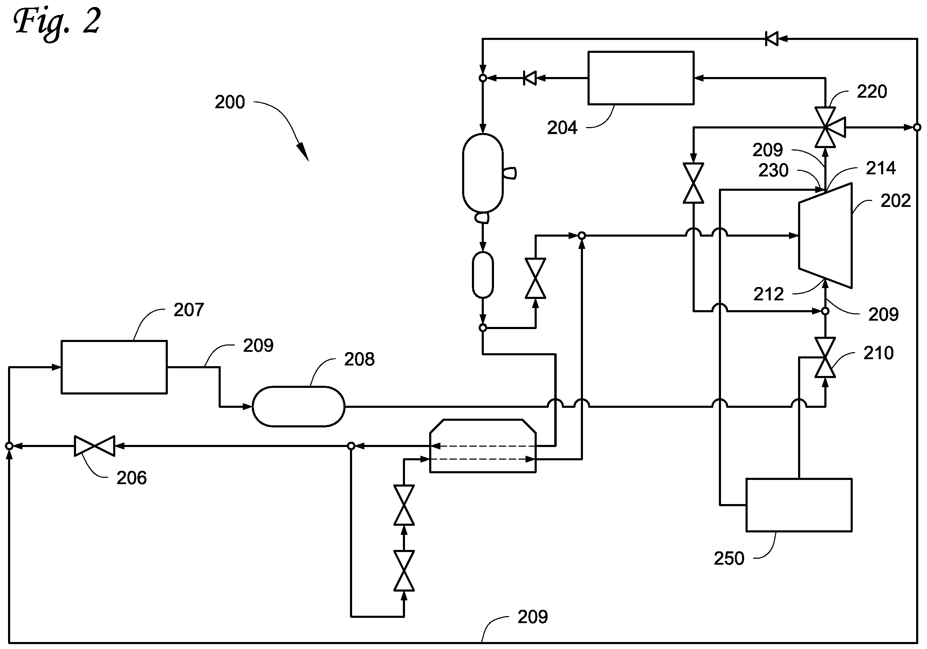

Fig. 2 illustrates a schematic diagram of a TRU 200. The TRU 200 includes a compressor 202, a three way valve 220, a condenser 204, an expansion device 206 (e.g. an expansion valve), and an evaporator 207 connected by refrigerant lines 209 to form a refrigeration circuit. The TRU 200 includes a TRU controller 250. The TRU 200 also includes an accumulator 208 and an ETV 210 positioned in-line with the refrigerant line 209 between the accumulator 208 and the compressor 202.

It is known to the art that by controlling the refrigerant flow directions, for example, via controlling a three-way valve 220, the TRU 200 can be configured to work in a plurality of modes, including a cooling mode and a heating/defrosting mode. It is also known in the art that the refrigerant circuit can also include other components, such as a refrigerant dryer and/or a suction line heat exchanger. The embodiments as shown herein are exemplary.

The compressor 202 is configured to compress refrigerant vapor. In operation, the compressor 202 generally sucks refrigerant vapor from an inlet 212, compresses the refrigerant vapor, then discharges the compressed refrigerant vapor out of the compressor 202 through an outlet 214.

In the cooling mode, the compressed refrigerant is generally directed to the condenser 204 first, then through the expansion device 206 into the evaporator 207. In the cooling mode, the TRU 200 generally is configured to provide cooling to an internal space (such as the internal space 104 in Fig. 1) of a transport unit (such as the transport unit 100 in Fig. 1).

In the heating/defrosting mode, the compressed refrigerant is generally directed into the evaporator 207 first and then into the compressor 202. The TRU 200 is generally configured to provide heating to the internal space (the heating mode) or melt icing on the evaporator 207 (the defrosting mode).

The TRU 200 also includes a probe 230 that is positioned close to the outlet 214 of the compressor 202. In some embodiments, the probe 230 may be positioned at a compressor top cap (not shown) of the compressor 202. The probe 230 can be a temperature and/or a pressure probe, which may be configured to measure a discharge temperature (T_{dis}) and/or a discharge pressure (P_{dis}) of the refrigerant compressed by the compressor 202. It is generally known in the art that a saturated discharge temperature (Tₛₐₜ) of the refrigerant discharged from the compressor 202 can be derived from the P_{dis} measured, for example, by the probes 230.

The ETV 210 is positioned upstream of the inlet 212, and is positioned in-line with the refrigerant line 209. The ETV 210 is generally known in the art. The ETV 210 can have a variable opening (not shown) that is configured to allow a fluid to flow there through. A size of the variable opening can be controlled electronically. Controlling the size of the variable opening of the ETV 210 of the TRU 200 can regulate a volume of the refrigerant flowing into the inlet 212 of the compressor 202.

In some embodiments, the variable opening of the ETVs 210 can be controlled in a step-wise manner from a fully open state to a fully closed state. For example, in one particular example of the ETV 210 sold by Danfoss Global Group, there are 800 steps between the fully open state and the fully closed state, with 0 being the fully closed state and 800 being the fully open state. A value between 0 and 800 corresponds to a particular size of the variable opening between the fully open state and the fully closed state, with a larger value corresponding generally to a larger opening size. The ETV 210 can be controlled for example by the TRU controller 250.

The compressor 202 of the TRU 200 is generally configured to compress refrigerant vapor flowing into the inlet 212. The compressor 202 may experience liquid refrigerant flooding during operation. The liquid refrigerant flooding generally refers to a condition when liquid refrigerant enters the inlet 212 of the compressor 202 and is compressed by the compressor 202. Liquid refrigerant flooding can cause mechanical failures of the compressor 202. Flooding may happen when the TRU 200 is operated in the heating/defrosting mode, or when the TRU 200 transitions from the cooling mode to the heating mode. In these operation conditions, liquid refrigerant in the evaporator 207 may flow into the inlet 212 of the compressor 202, causing the compressor 202 to become flooded by the liquid refrigerant. Reducing/preventing the occurrence or risk of liquid refrigerant flooding in the compressor can help prevent/reduce mechanical failures of the compressor 202.

In the embodiment as illustrated in Fig. 2, the TRU 200 is equipped with the ETV 210 to control refrigerant flow into the inlet 212 of the compressor 202. A method of reducing refrigerant flooding may include: when the compressor 202 of the TRU 200 is at a risk of being flooded by liquid refrigerant flowing into the inlet 212, closing down the ETV 210 to limit the amount of liquid refrigerant flowing into the inlet 212 of the compressor 202 so as to reduce/prevent the occurrences/risk of liquid refrigerant flooding to the compressor 202.

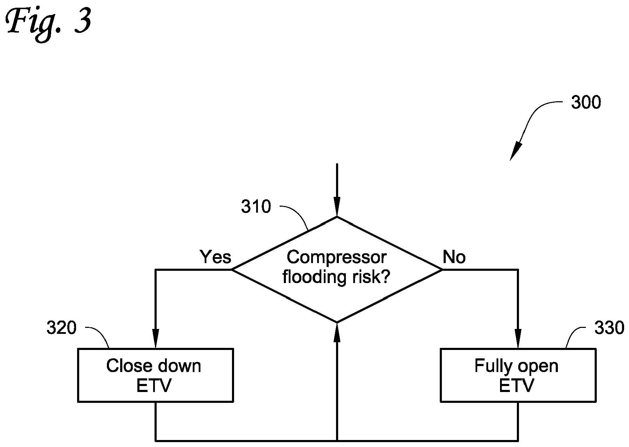

Fig. 3 illustrates a flow chart of a method 300 to reduce/prevent compressor flooding in a compressor of a TRU. The method may be used with, for example, the compressor 202 in the TRU 200 in Fig. 2. The method 300 can be executed by, for example, the controller 250 in Fig. 2.

At 310, the TRU is configured to determine whether there is a (unacceptable) risk of compressor flooding. The determination can be made based on, for example, the TRU operation modes and/or parameters of the TRU operation. In some embodiments, it can be determined that the compressor is at the (unacceptable) risk of compressor flooding when the TRU is in a heating/defrosting mode, or in a transition between a cooling mode and the heating/defrosting mode. The determination can also be made based on other operation modes or parameters of the TRU.

If the TRU is at the (unacceptable) risk of compressor flooding, the method 300 proceeds to 320. At 320, an ETV, such as the ETV 210 in Fig. 2, can be controlled to close down (or in some embodiments, to shut off) so as to limit the amount of refrigerant flowing into the compressor, such as the compressor 202 in Fig. 2. The ETVs can be controlled in a step-wise manner. Closing down the ETV can be performed by setting the ETV to a per-determined step value or the ETV operation can be limited to a desired step range. The desired step value or the per-determined step range can be values or ranges obtained in a laboratory setting. For example, the desired step value or range can be a value or range that shows effect on reducing the occurrences of compressor flooding, or reduce the risk of compressor flooding to an acceptable level, in the laboratory setting.

The method 300 then returns to 310 to keep monitoring whether there is a risk of compressor flooding risk.

If there is no risk (or acceptable risk) of compressor flooding at 310, the method 300 does not command the ETV to close down. The method 300 proceeds to 330 to fully open the ETV. For example, if an ETV with 800 steps is used, the ETV is commanded to open to 800. The ETV may then return to a normal operation mode, in which the ETV may be controlled based on other operational parameters of the TRU. The method 300 then returns to 310 to check the risk of compressor flooding.

It is noted that at 320 and/or 330, the method 300 can wait for a desired amount of time, such as one second before proceeding to 310 to check the risk of compressor flooding.

Whether the compressor is at the (unacceptable) risk of compressor flooding can be monitored by measuring a refrigerant discharge temperature of a compressor in a TRU. (Such as the temperature measured by the probe 230 positioned close to the outlet 214 in Fig. 2.) The compressor of the TRU is generally configured to compress a low-pressure refrigerant vapor into high-pressure refrigerant superheat. Refrigerant superheat refers to a refrigerant vapor having a temperature that is higher than the saturated discharge temperature. The temperature of the refrigerant superheat can be measured by the probe 230, while the saturated discharge temperature can be calculated from the measure discharge pressure (Tₛₐₜ). When the discharge temperature of the refrigerant is higher than the Tₛₐₜ, the refrigerant is generally in a vapor state and may likely include little liquid refrigerant. When the discharge temperature of the refrigerant is lower than the Tₛₐₜ, the refrigerant may generally include some liquid refrigerant. When the discharge temperature of the refrigerant is sufficiently above the saturate temperature, such as 10-15°R above Tₛₐₜ, the refrigerant is generally refrigerant vapor. In normal operation condition, the refrigerant discharged from the compressor is generally refrigerant superheat vapor.

When liquid refrigerant flows into the compressor (e.g. the compressor 202 in Fig. 2) of the TRU, which is associated with a risk of compressor flooding, the liquid refrigerant can cause temperature reduction and/or also reduction of the refrigerant superheat in the refrigerant discharged from the compressor. Therefore, temperature reduction and/or loss of the refrigerant superheat in the refrigerant discharge temperature of the compressor may indicate a risk of compressor flooding.

When the refrigerant discharge temperature of the compressor is substantially higher than the Tₛₐₜ, such as for example about 10-15°R higher than the Tₛₐₜ, the discharged refrigerant may be generally in a vapor state. Under this condition, even though a small amount of liquid refrigerant may flow into the compressor via the ETV, the risk of the compressor being flooded by the liquid refrigerant is low. In this state, the ETV can be fully open.

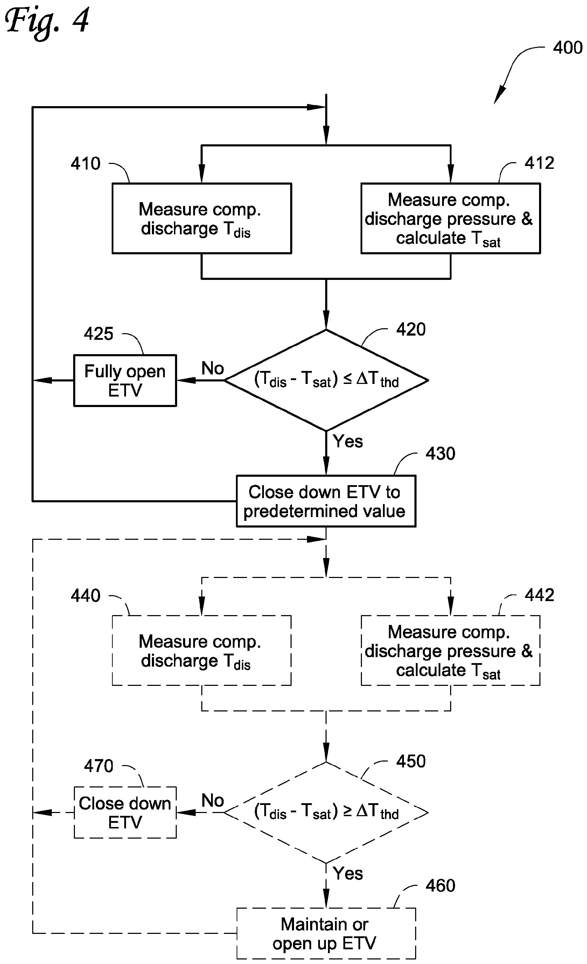

Fig. 4 illustrates a flow chart of another method 400 that is configured to monitor the refrigerant discharge temperature and control the ETV based on the refrigerant discharge temperature of the compressor. The method 400 may be executed, for example, by a controller of the TRU (such as the TRU controller 250 in Fig. 2). The refrigerant discharge temperature (T_{dis}) and/or pressure (P_{dis}) may be measured, for example, by a temperature probe, such as the probes 230 in Fig. 2.

At 410 and 412, T_{dis} and P_{dis} of the refrigerant discharged from the compressor are measured (for example, by the probes 230 in Fig. 2), and the measured values are provided to the controller.

It is known in the art that Tₛₐₜ of the refrigerant can have an association with the pressure of the refrigerant. Therefore, Tₛₐₜ of the refrigerant discharged by the compressor can be obtained or derived based on the P_{dis} of the discharged refrigerant. The Tₛₐₜ may be obtained by the controller, for example, by calculation based on a formula or a look up table.

At 420, a difference between the Tₛₐₜ and T_{dis} is measured. Generally, if T_{dis} is higher than Tₛₐₜ, the refrigerant discharged by the compressor may contain refrigerant superheat. At 420, the difference between the Tₛₐₜ and T_{dis} is compared to a desired threshold temperature value ΔT_{thd}.

ΔT_{thd} can be determined, for example, in a laboratory setting. In the laboratory setting, it can be determined a minimal ΔT_{thd} or a range of ΔT_{thd} that is associated with a reduced (or an acceptable) risk of refrigerant flooding in the compressor. Generally, the higher the ΔT_{thd} is, the less the risk of the refrigerant flooding in the compressor. In the laboratory setting, the ΔT_{thd} can be determined that when the refrigerant discharge temperature is higher than the Tₛₐₜ by the ΔT_{thd} , the refrigerant is generally refrigerant superheated vapor. This may indicate that the risk of compressor flooding is low (or acceptable). In some embodiments, the ΔT_{thd} is about 10-15°R.

If the difference between the Tₛₐₜ and T_{dis} is larger than ΔT_{thd}, which indicates that there is a low (or acceptable) risk of compressor flooding, the method 400 proceeds to 425. At 425, the ETV is commanded to a fully open status (e.g. open to 800 in an ETV with 800 steps.) After the ETV being fully opened, the ETV may return to a normal operation mode and be controlled by other operational parameters of the TRU.

The method 400 then proceeds back to 410 and 412 to measure P_{dis} and T_{dis}, and determine Tₛₐₜ. It is noted that the method 400 can wait for a desired period of time, such as one second, before the method 400 proceeding to 410 and 412 at 425.

If the difference between the Tₛₐₜ and T_{dis} is equal to or lower than the ΔT_{thd}, which indicates that there is a high (or unacceptable) risk of compressor flooding, the method 400 proceeds to 430. At 430, the ETV is commanded to reduce a size of an opening of the ETV to a desired value (or a desired range). Reducing the size of the opening of the ETV can reduce liquid refrigerant flowing into the compressor, reducing the risk of refrigerant flooding in the compressor. The desired value (or range) may be determined, for example, in a laboratory setting. The per-determined value (or range) can be a value (or range) where the ETV can limit the liquid refrigerant flow to the compressor so that the difference between Tₛₐₜ and T_{dis} is at least ΔT_{thd}.

The method 400 then proceeds back to 410 and 412 after 430 to measure P_{dis} and T_{dis}, and determine Tₛₐₜ. It is noted that the method 400 can wait for a desired period of time, such as one second, before the method 400 proceeding to 410 and 412 at 430.

The method 400 may optionally proceed to a feedback control of the ETV after 430, which includes 440, 442, 450, 460 and 470 as shown in Fig. 4. The feedback control may be configured to control the ETV so that the difference between the refrigerant discharge temperature and the Tₛₐₜ of the compressor is at least ΔT_{thd}.

At 440 and 442, T_{dis} and P_{dis} of the refrigerant discharged from the compressor are measured, and the measured values are provided to the controller. The saturated discharge temperature Tₛₐₜ is obtained or derived at 442 based on the P_{dis} of the refrigerant discharged from the compressor.

At 450, a difference between the Tₛₐₜ and T_{dis} is measured. If the difference is at least ΔT_{thd}, which indicates that the risk of compressor flooding is low (or acceptable), the method 400 proceeds to 460. If the difference is smaller than ΔT_{thd}, which indicates that the risk of compressor flooding is high (or unacceptable), the method 400 proceeds to 470.

At 460, the ETV is commanded to maintain its opening or open up to increase the opening of the ETV.

At 470, the ETV is commanded to close down its opening so as to reduce the amount of refrigerant allowed through the ETV.

After 460 and 470, the method 400 proceeds back to 440 and 442 to continue the feedback control of the ETV.

It is appreciated that the embodiments as disclosed herein are exemplary. The general principle is to use the ETV to limit an amount of refrigerant flowing into the compressor when there is a (unacceptable) risk of compressor flooding. In some embodiments, the superheat temperature of the refrigerant discharged by the compressor can be used to monitor whether there is a (unacceptable) risk of compressor flooding. It is appreciated that other parameters can be used to monitor whether there is a risk of compressor flooding.

The embodiments disclosed herein are generally directed to measuring discharge temperature from the compressor. It is appreciated that the embodiments disclosed herein may also be adapted to use suction temperature and/or suction saturated temperature of the compressor to determine the risk of compressor flooding.

With regard to the foregoing description, it is to be understood that changes may be made in detail, without departing from the scope of the present invention. It is intended that the specification and depicted embodiments are to be considered exemplary only, with a true scope of the invention being indicated by the broad meaning of the claims.

## Claims

1. A method to control an electronic throttle valve ETV (210) of a transport refrigeration unit (200) comprising a compressor (202), a condenser (204), an expansion device (206) and an evaporator (207) forming a refrigeration circuit, wherein the ETV (210) is positioned in-line between the evaporator (207) and the compressor (202), the method comprising:
determining whether there is a risk of the compressor (202) of the transport refrigeration unit (200) being flooded by liquid refrigerant;
closing down the ETV (210) when there is a risk of the compressor (202) being flooded by liquid refrigerant; and
opening up the ETV (210) where there is no risk of the compressor (202) being flooded by liquid refrigerant,
wherein the ETV (210) is configured to regulate a refrigerant flow into the compressor (202) of the transport refrigeration unit (200), and
wherein determining whether there is a risk of a compressor (202) of the transport refrigeration unit (200) being flooded by liquid refrigerant includes:
measuring a refrigerant discharge temperature from the compressor (202);
comparing the refrigerant discharge temperature to a saturated discharge temperature of the refrigerant;
when a difference between the refrigerant discharge temperature and the saturated discharge temperature of the refrigerant is below or equal to a threshold value, determining that there is a risk of compressor (202) being flooded; and
when the difference between the refrigerant discharge temperature and the saturated discharge temperature of the refrigerant is higher than the threshold value, determining that there is no risk of compressor (202) being flooded.

2. The method of claim 1, wherein the saturated discharge temperature of the refrigerant is derived from a refrigerant discharge pressure of the compressor.

3. The method of claim 1, wherein the threshold value is between 10 to 15°R superheat.

4. A method to control an electronic throttle valve ETV (210) of a transport refrigeration unit (200) comprising a compressor (202), a condenser (204), an expansion device (206) and an evaporator (207) forming a refrigeration circuit, wherein the ETV (210) is positioned in-line between the evaporator (207) and the compressor (202), the method comprising:
determining whether there is a risk of a compressor (202) of the transport refrigeration unit (200) being flooded by liquid refrigerant;
closing down the ETV (210) when there is a risk of the compressor (202) being flooded by liquid refrigerant; and
opening up the ETV (210) where there is no risk of the compressor (202) being flooded by liquid refrigerant,
wherein the ETV (210) is configured to regulate a refrigerant flow into the compressor (202) of the transport refrigeration unit (200), and
wherein determining whether there is a risk of a compressor (202) of the transport refrigeration unit (200) being flooded by liquid refrigerant includes:
measuring a refrigerant discharge temperature from the compressor (202);
when the temperature of the refrigerant discharge temperature is below or equal to a temperature threshold value, determining that there is a risk of compressor (202) being flooded; and
when the temperature of the refrigerant discharge temperature is higher than the temperature threshold value, determining that there is no risk of compressor (202) being flooded.

5. The method of claim 4, wherein the temperature threshold value is between 10 to 15 °R superheat.

6. A method to control an electronic throttle valve ETV (210) of a transport refrigeration unit (200) comprising a compressor (202), a condenser (204), an expansion device (206) and an evaporator (207) forming a refrigeration circuit, wherein the ETV (210) is positioned in-line between the evaporator (207) and the compressor (202), the method comprising:
determining whether there is a risk of a compressor (202) of the transport refrigeration unit (200) being flooded by liquid refrigerant;
closing down the ETV (210) when there is a risk of the compressor (202) being flooded by liquid refrigerant;
opening up the ETV (210) where there is no risk of the compressor (202) being flooded by liquid refrigerant;
measuring a refrigerant discharge temperature from the compressor (202);
comparing the refrigerant discharge temperature to a saturated discharge temperature of the refrigerant; and
controlling the electronic throttle so that a difference between the refrigerant discharge temperature from the compressor (202) and the saturated discharge temperature of the refrigerant is at least at a desired threshold value;
wherein the ETV (210) is configured to regulate a refrigerant flow into the compressor (202) of the transport refrigeration unit (200).

7. The method of claim 6, wherein
controlling the electronic throttle so that a difference between the refrigerant discharge temperature from the compressor (202) and the saturated discharge temperature of the refrigerant is at least at a desired threshold value includes:
when the difference between the refrigerant discharge temperature and the saturated discharge temperature of the refrigerant is lower than the desired threshold value, closing down the ETV (210); and
when the difference between the refrigerant discharge temperature and the saturated discharge temperature of the refrigerant is higher than the desired threshold value, opening up the ETV (210).

8. The method of claim 1, wherein the ETV (210) is controlled in a step-wise manner.

9. The method of claim 1, wherein
determining whether there is a risk of a compressor (202) of the transport refrigeration unit (200) being flooded by liquid refrigerant includes:
when the transport refrigeration unit (200) is in at least one of a heating/defrosting mode and a transition between a cooling mode and the heating/defrosting mode, determining there is a risk of the compressor (202) of the transport refrigeration unit (200) being flooded.

## Patentansprüche

1. Verfahren zum Steuern eines elektronischen Drosselventils ETV (Electronic Throttle Valve) (210) einer Transportkühleinheit (200), die einen Verdichter (202), einen Kondensator (204), eine Expansionsvorrichtung (206) und einen Verdampfer (207), die einen Kühlungskreislauf bilden, umfasst, wobei das ETV (210) in Reihe zwischen dem Verdampfer (207) und dem Verdichter (202) positioniert ist, wobei das Verfahren Folgendes umfasst:
Bestimmen, ob es ein Risiko gibt, dass der Verdichter (202) der Transportkühleinheit (200) durch ein flüssiges Kältemittel geflutet wird;
Schließen des ETV (210), wenn es ein Risiko gibt, dass der Verdichter (202) durch ein flüssiges Kältemittel geflutet wird; und
Öffnen des ETV (210), wenn es kein Risiko gibt, dass der Verdichter (202) durch ein flüssiges Kältemittel geflutet wird,
wobei das ETV (210) dazu konfiguriert ist, einen Kältemittelfluss in den Verdichter (202) der Transportkühleinheit (200) zu regeln, und
wobei das Bestimmen, ob es ein Risiko gibt, dass ein Verdichter (202) der Transportkühleinheit (200) durch ein flüssiges Kältemittel geflutet wird, Folgendes beinhaltet:
Messen einer Kältemittelaustrittstemperatur von dem Verdichter (202);
Vergleichen der Kältemittelaustrittstemperatur mit einer gesättigten Austrittstemperatur des Kältemittels;
wenn ein Unterschied zwischen der Kältemittelaustrittstemperatur und der gesättigten Austrittstemperatur des Kältemittels unterhalb eines oder gleich einem Schwellenwert ist, Bestimmen, dass es ein Risiko gibt, dass der Verdichter (202) geflutet wird; und
wenn der Unterschied zwischen der Kältemittelaustrittstemperatur und der gesättigten Austrittstemperatur des Kältemittels höher als der Schwellenwert ist, Bestimmen, dass es kein Risiko gibt, dass der Verdichter (202) geflutet wird.

2. Verfahren nach Anspruch 1, wobei die gesättigte Austrittstemperatur des Kältemittels aus einem Kältemittelaustrittsdruck des Verdichters abgeleitet wird.

3. Verfahren nach Anspruch 1, wobei der Schwellenwert zwischen 10 und 15 °R einer Überhitzung liegt.

4. Verfahren zum Steuern eines elektronischen Drosselventils ETV (210) einer Transportkühleinheit (200), die einen Verdichter (202), einen Kondensator (204), eine Expansionsvorrichtung (206) und einen Verdampfer (207), die einen Kühlungskreislauf bilden, umfasst, wobei das ETV (210) in Reihe zwischen dem Verdampfer (207) und dem Verdichter (202) positioniert ist, wobei das Verfahren Folgendes umfasst:
Bestimmen, ob es ein Risiko gibt, dass ein Verdichter (202) der Transportkühleinheit (200) durch ein flüssiges Kältemittel geflutet wird;
Schließen des ETV (210), wenn es ein Risiko gibt, dass der Verdichter (202) durch ein flüssiges Kältemittel geflutet wird; und
Öffnen des ETV (210), wenn es kein Risiko gibt, dass der Verdichter (202) durch ein flüssiges Kältemittel geflutet wird,
wobei das ETV (210) dazu konfiguriert ist, einen Kältemittelfluss in den Verdichter (202) der Transportkühleinheit (200) zu regeln, und
wobei das Bestimmen, ob es ein Risiko gibt, dass ein Verdichter (202) der Transportkühleinheit (200) durch ein flüssiges Kältemittel geflutet wird, Folgendes beinhaltet:
Messen einer Kältemittelaustrittstemperatur von dem Verdichter (202);
wenn die Temperatur der Kältemittelaustrittstemperatur unterhalb eines oder gleich einem Temperaturschwellenwert ist, Bestimmen, dass es ein Risiko gibt, dass der Verdichter (202) geflutet wird; und
wenn die Temperatur der Kältemittelaustrittstemperatur höher als der Temperaturschwellenwert ist, Bestimmen, dass es kein Risiko gibt, dass der Verdichter (202) geflutet wird.

5. Verfahren nach Anspruch 4, wobei der Temperaturschwellenwert zwischen 10 und 15 °R einer Überhitzung liegt.

6. Verfahren zum Steuern eines elektronischen Drosselventils ETV (210) einer Transportkühleinheit (200), die einen Verdichter (202), einen Kondensator (204), eine Expansionsvorrichtung (206) und einen Verdampfer (207), die einen Kühlungskreislauf bilden, umfasst, wobei das ETV (210) in Reihe zwischen dem Verdampfer (207) und dem Verdichter (202) positioniert ist, wobei das Verfahren Folgendes umfasst:
Bestimmen, ob es ein Risiko gibt, dass ein Verdichter (202) der Transportkühleinheit (200) durch ein flüssiges Kältemittel geflutet wird;
Schließen des ETV (210), wenn es ein Risiko gibt, dass der Verdichter (202) durch ein flüssiges Kältemittel geflutet wird;
Öffnen des ETV (210), wenn es kein Risiko gibt, dass der Verdichter (202) durch ein flüssiges Kältemittel geflutet wird,
Messen einer Kältemittelaustrittstemperatur von dem Verdichter (202);
Vergleichen der Kältemittelaustrittstemperatur mit einer gesättigten Austrittstemperatur des Kältemittels; und
Steuern des elektronischen Ventils derart, dass ein Unterschied zwischen der Kältemittelaustrittstemperatur von dem Verdichter (202) und der gesättigten Austrittstemperatur des Kältemittels wenigstens bei einem gewünschten Schwellenwert liegt;
wobei das ETV (210) dazu konfiguriert ist, einen Kältemittelfluss in den Verdichter (202) der Transportkühleinheit (200) zu regeln.

7. Verfahren nach Anspruch 6, wobei
das Steuern des elektronischen Ventils derart, dass ein Unterschied zwischen der Kältemittelaustrittstemperatur von dem Verdichter (202) und der gesättigten Austrittstemperatur des Kältemittels wenigstens bei einem gewünschten Schwellenwert liegt, Folgendes beinhaltet:
wenn der Unterschied zwischen der Kältemittelaustrittstemperatur und der gesättigten Austrittstemperatur des Kältemittels niedriger als der gewünschte Schwellenwert ist, Schließen des ETV (210); und
wenn der Unterschied zwischen der Kältemittelaustrittstemperatur und der gesättigten Austrittstemperatur des Kältemittels höher als der gewünschte Schwellenwert ist, Öffnen des ETV (210).

8. Verfahren nach Anspruch 1, wobei das ETV (210) auf eine schrittweise Art gesteuert wird.

9. Verfahren nach Anspruch 1, wobei
das Bestimmen, ob es ein Risiko gibt, dass ein Verdichter (202) der Transportkühleinheit (200) durch ein flüssiges Kältemittel geflutet wird, Folgendes beinhaltet:
wenn sich die Transportkühleinheit (200) in einem Aufwärmen/Auftauen-Modus und/oder einem Übergang zwischen einem Kühlmodus und dem Aufwärmen/Auftauen-Modus befindet, Bestimmen, dass es ein Risiko gibt, dass der Verdichter (202) der Transportkühleinheit (200) geflutet wird.

## Revendications

1. Procédé de commande d'un robinet d'étranglement électronique ETV (210) d'une unité de réfrigération de transport (200) comprenant un compresseur (202), un condenseur (204), une vanne de détente (206) et un évaporateur (207) formant un circuit de réfrigération, dans lequel l'ETV (210) est positionné en ligne entre l'évaporateur (207) et le compresseur (202), le procédé comprenant :
la détermination qu'il existe ou non un risque d'engorgement du compresseur (202) de l'unité de réfrigération de transport (200) par un réfrigérant liquide ;
la fermeture de l'ETV (210) en cas de risque d'engorgement du compresseur (202) par le réfrigérant liquide ; et
l'ouverture de l'ETV (210) en l'absence de risque d'engorgement du compresseur (202) par le réfrigérant liquide,
dans lequel l'ETV (210) est configuré pour réguler un flux de réfrigérant entrant dans le compresseur (202) de l'unité de réfrigération de transport (200), et
dans lequel la détermination qu'il existe ou non un risque d'engorgement du compresseur (202) de l'unité de réfrigération de transport (200) par un réfrigérant liquide comporte :
la mesure d'une température de décharge de réfrigérant à partir du compresseur (202) ;
la comparaison de la température de décharge de réfrigérant à une température de décharge saturée du réfrigérant ;
quand une différence entre la température de décharge de réfrigérant et la température de décharge saturée du réfrigérant est inférieure ou égale à une valeur de seuil, la détermination qu'il existe un risque d'engorgement du compresseur (202) ; et
quand la différence entre la température de décharge de réfrigérant et la température de décharge saturée du réfrigérant est supérieure à la valeur de seuil, la détermination d'une absence de risque d'engorgement du compresseur (202).

2. Procédé selon la revendication 1, dans lequel la température de décharge saturée du réfrigérant est dérivée d'une pression de décharge de réfrigérant du compresseur.

3. Procédé selon la revendication 1, dans lequel la valeur de seuil est comprise entre 10 et 15 °R de surchauffe.

4. Procédé de commande d'un robinet d'étranglement électronique ETV (210) d'une unité de réfrigération de transport (200) comprenant un compresseur (202), un condenseur (204), une vanne de détente (206) et un évaporateur (207) formant un circuit de réfrigération, dans lequel l'ETV (210) est positionné en ligne entre l'évaporateur (207) et le compresseur (202), le procédé comprenant :
la détermination qu'il existe ou non un risque d'engorgement du compresseur (202) de l'unité de réfrigération de transport (200) par un réfrigérant liquide ;
la fermeture de l'ETV (210) en cas de risque d'engorgement du compresseur (202) par le réfrigérant liquide ; et
l'ouverture de l'ETV (210) en l'absence de risque d'engorgement du compresseur (202) par le réfrigérant liquide,
dans lequel l'ETV (210) est configuré pour réguler un flux de réfrigérant entant dans le compresseur (202) de l'unité de réfrigération de transport (200), et
dans lequel la détermination qu'il existe ou non un risque d'engorgement du compresseur (202) de l'unité de réfrigération de transport (200) par un réfrigérant liquide comporte :
la mesure d'une température de décharge de réfrigérant à partir du compresseur (202) ;
quand la température de la température de décharge de réfrigérant est inférieure ou égale à une valeur de seuil de température, la détermination qu'il existe un risque d'engorgement du compresseur (202) ; et
quand la température de la température de décharge de réfrigérant est supérieure à la valeur de seuil de température, la détermination d'une absence de risque d'engorgement du compresseur (202) .

5. Procédé selon la revendication 4, dans lequel la valeur de seuil de température est comprise entre 10 et 15 °R de surchauffe.

6. Procédé de commande d'un robinet d'étranglement électronique ETV (210) d'une unité de réfrigération de transport (200) comprenant un compresseur (202), un condenseur (204), une vanne de détente (206) et un évaporateur (207) formant un circuit de réfrigération, dans lequel l'ETV (210) est positionné en ligne entre l'évaporateur (207) et le compresseur (202), le procédé comprenant :
la détermination qu'il existe ou non un risque d'engorgement du compresseur (202) de l'unité de réfrigération de transport (200) par un réfrigérant liquide ;
la fermeture de l'ETV (210) en cas de risque d'engorgement du compresseur (202) par le réfrigérant liquide ; et
l'ouverture de l'ETV (210) en l'absence de risque d'engorgement du compresseur (202) par le réfrigérant liquide,
la mesure d'une température de décharge de réfrigérant à partir du compresseur (202) ;
la comparaison de la température de décharge de réfrigérant à une température de décharge saturée du réfrigérant ; et
la commande de l'étranglement électronique de telle sorte qu'une différence entre la température de décharge de réfrigérant provenant du compresseur (202) et la température de décharge saturée du réfrigérant soit au moins à une valeur de seuil souhaitée ;
dans lequel l'ETV (210) est configuré pour réguler un flux de réfrigérant entant dans le compresseur (202) de l'unité de réfrigération de transport (200) .

7. Procédé selon la revendication 6, dans lequel la commande de l'étranglement électronique de telle sorte qu'une différence entre la température de décharge de réfrigérant provenant du compresseur (202) et la température de décharge saturée du réfrigérant soit au moins à une valeur de seuil souhaitée comporte :
quand la différence entre la température de décharge de réfrigérant et la température de décharge saturée du réfrigérant est inférieure à la valeur de seuil souhaitée, la fermeture de l'ETV (210) ; et
quand la différence entre la température de décharge de réfrigérant et la température de décharge saturée du réfrigérant est supérieure à la valeur de seuil souhaitée, l'ouverture de l'ETV (210) .

8. Procédé selon la revendication 1, dans lequel l'ETV (210) est commandé pas à pas.

9. Procédé selon la revendication 1, dans lequel la détermination qu'il existe ou non un risque d'engorgement du compresseur (202) de l'unité de réfrigération de transport (200) par un réfrigérant liquide comporte :
quand l'unité de réfrigération de transport (200) est dans au moins l'un d'un mode de chauffage/décongélation et d'une transition entre un mode de refroidissement et le mode de chauffage/décongélation, la détermination qu'il existe un risque d'engorgement du compresseur (202) de l'unité de réfrigération de transport (200) .
